# EUROPÄISCHE PATENTSCHRIFT

(11) **EP 4 109 438 B1**
(45) Veröffentlichungstag und Bekanntmachung des Hinweises auf die Patenterteilung: **30.04.2025**
(21) Anmeldenummer: 22178606.4
(22) Anmeldetag: 13.06.2022
(51) Int. Cl.: G09F 3/00

(54) **VORRICHTUNG ZUM PLOMBIEREN VON SCHRAUBEN**
DEVICE FOR SEALING SCREWS
DISPOSITIF DE SCELLAGE SES VIS

(30) Priorität: 24.06.2021 DE 202021002177 U
(43) Veröffentlichungstag der Anmeldung: 28.12.2022
(73) Patentinhaber: ABN GmbH, 74196 Neuenstadt (DE)
(72) Erfinder: BRAUN, Andreas, 74196 Neuenstadt (DE); ORSAG, Andrej, 74196 Neuenstadt (DE)
(74) Vertreter: Schmid, Barbara

(56) Entgegenhaltungen:
- EP-A2- 1 154 392
- FR-A1- 2 356 221
- FR-A1- 2 784 780
- JP-A- H1 019 027

## Beschreibung

### TECHNISCHES GEBIET

Die Erfindung betrifft eine Vorrichtung, mittels derer Schrauben mit einem Plombendraht versehen werden können. Durch eine derartige Verplombung kann eine unbefugte Betätigung der Schraube verhindert werden.

### STAND DER TECHNIK

Bei elektronischen Haushaltszählern ist es bekannt, mittels einer Plombierschraube die Lage des elektronischen Haushaltszählers an seinem Bestimmungsort zu sichern. Damit soll verhindert werden, dass der Zähler unbefugt - beispielsweise zu Manipulationszwecken - von seinem Zählerplatz entommen wird. Eine solche Plombierschraube greift von der Frontseite des elektronischen Zählers aus quer durch sein Gehäuse hindurch und verankert sich beispielsweise in einem Adapter, an den der Zähler elektrisch angedockt worden ist. Das obere Ende der Plombierschraube, das aus der Frontseite des elektronischen Haushaltszählers nach vorne herausragt, wird von einer wannen- oder haubenartigen Abdeckung abgedeckt.

Aus der DE 20 2010 004 692 U1 ist bekannt, dass die bei der Verplombung vorgesehene Plombe einerseits die Plombierschraube selbst an ihrer Verdrehung hindert und andererseits auch die Abdeckung nicht mehr von dem oberen Ende der Plombierschraube abgenommen werden kann. Mit einer solchen Verplombung kann also auch das unbefugte Wegnehmen der Abdeckung von der Plombierschraube verhindert werden. Die Plombierschraube und damit auch die Plombe selbst ist von außen frei zugänglich und sichtbar, so dass Manipulationen an der Plombe unmittelbar erkannt werden können.

Sollen Bauteile durch eine Plombierung geschützt werden, müssen in der Regel spezielle Plombierschrauben eingesetzt werden, auch müssen entsprechende Anschlüsse für die Sicherung durch eine Plombe vorgesehen werden. Eine nachträgliche Plombierung von beliebigen Schrauben ist dagegen oftmals nicht möglich. Das Dokument JPH1019027 ist als nächstliegender Stand der Technik angesehen, und es offenbart alle Merkmale in dem Oberbegriff des Anspruchs 1.

### DARSTELLUNG DER ERFINDUNG

Ausgehend von diesem vorbekannten Stand der Technik liegt der Erfindung die Aufgabe zugrunde, eine Vorrichtung zum Plombieren von Schrauben anzugeben, bei der beliebige Schrauben ohne weitere Maßnahmen plombiert werden können.

Die erfindungsgemäße Vorrichtung zum Plombieren von Schrauben ist durch die Merkmale des Hauptanspruchs 1 gegeben. Sinnvolle Weiterbildungen der Erfindung sind Gegenstand von sich an diesen Anspruch anschließenden weiteren Ansprüchen,
Die erfindungsgemäße Vorrichtung zum Plombieren von Schrauben besitzt ein Ösenelement, das an einer beliebigen Schraube befestigt werden kann. Dabei liegt das Ösenelement nach der Befestigung unmittelbar unterhalb des Schraubenkopfes der Schraube. An dem Ösenelement ist eine Deckellasche befestigt. Diese Deckellasche kann während des Anziehens der Schraube zunächst etwa in einer Ebene mit dem Ösenelement vorliegen. Sobald die Schraube korrekt angezogen wurde, kann die Deckellasche umgeklappt werden, so dass die Deckellasche im umgeklappten Zustand oberhalb des Schraubenkopfes angeordnet ist. Die Deckellasche verdeckt dadurch das Betätigungselement des Schraubenkopfes. Die Schraube kann somit nicht mehr gedreht und damit auch nicht gelöst werden. Um das Deckelelement in dieser umgeklappten Position zu sichern, ist an der Deckellasche eine erste Fixierlasche mit einem Durchbruch für einen Plombendraht vorhanden. An dem Ösenelement ist eine zweite Fixierlasche vorhanden, die ebenfalls einen Durchbruch für einen Plombendraht aufweist. Im umgeklappten Zustand der Deckellasche sind die erste Fixierlasche und die zweite Fixierlasche parallel zueinander angeordnet. Erfindungsgemäß weist die erste oder die zweite Fixierlasche eine erste Laschenwand und eine zweite Laschenwand auf, die mit einem gewissen gegenseitigen Abstand zueinander angeordnet sind. In beiden Laschenwänden ist jeweils ein Durchbruch für einen Plombendraht vorhanden, wobei die Durchbrüche der beiden Laschenwände miteinander fluchten. Die andere, einwandige Fixierlasche kommt im umgeklappten Zustand der Deckellasche zwischen den beiden Laschenwänden der zweiwandigen Fixierlasche zu Liegen.

Durch die Verwendung von insgesamt drei Durchbrüchen für den Plombendraht sind insgesamt zwei Scherstellen vorhanden. Dadurch kann die Deckellasche auch bei längeren Plombendrähten nicht mehr so weit angehoben werden, dass eine Manipulation der Schraube möglich wäre.

Vorzugsweise kann die erste oder die zweite Fixierlasche mit den beiden Laschenwänden taschenförmig ausgebildet sein. In diese taschenförmige Fixierlasche kann dann die andere, einwandige Fixierlasche eingesteckt werden, wenn die Deckellasche auf den Schraubenkopf umgeklappt wird.

Der Abstand zwischen der ersten und der zweiten Laschenwand der taschenartigen Fixierlasche kann vorzugsweise etwa der Breite der einwandigen Fixierlasche entsprechen. Auf diese Weise liegen die beiden Laschenwände dicht an der einwandigen Fixierlasche an, so dass eine enge Plombierung möglich ist.

Das Ösenelement kann eine geschlossene Öse aufweisen, die über den Schraubenschaft oder das Schraubengewinde gesteckt werden kann. Insbesondere bei Spezialschrauben mit ungleichmäßigen Durchmessern des Schraubenschafts oder des Schraubengewindes kann es vorteilhaft sein, wenn das Ösenelement C-förmig ausgebildet ist. Das C-förmige Ösenelement kann in diesem Fall an der gewünschten Position unmittelbar unterhalb des Schraubenkopfes um den Schraubenschaft oder das Schraubgewinde gesteckt werden. Die Öffnung des Ösenelements kann dabei so gewählt werden, dass einerseits eine problemlose Befestigung des Ösenelements ermöglicht wird, andererseits jedoch keine zerstörungsfreie Entfernung des Ösenelements von der Schraube mehr möglich ist.

Einer der beiden Durchbrüche in den Laschenwänden der taschenartigen Fixierlasche kann vorzugsweise als Schlitz ausgebildet sein. Dies erleichtert die Herstellung der taschenartigen Fixierlasche und ist somit wirtschaftlich vorteilhaft.

Vorzugsweise kann die Deckellasche über einen Abstandshalter mit dem Ösenelement verbunden sein. Der Abstandshalter kann die Höhe des Schraubenkopfes ausgleichen, so dass das Ösenelement und die Deckellasche nach dem Umklappen der Deckellasche mit einem gewissen gegenseitigen Abstand zueinander vorhanden und gleichzeitig parallel zueinander ausgerichtet sein können.

An der Deckellasche kann zumindest ein Kragelement vorhanden sein, das im umgeklappten Zustand der Deckellasche in eine Einkerbung des Schraubenkopfes eintaucht. Dadurch kann die Deckellasche dicht an der Oberseite des Schraubenkopfes anliegen, so dass eine nachträgliche Manipulation der Schraube zusätzlich erschwert wird. Dieser Effekt kann noch dadurch verstärkt werden, wenn die Außenkontur des Kragelements der Innenkontur der Einkerbung des Schraubenkopfes entspricht. Dabei kann das Kragelement des Schraubenkopfes vorzugsweise so ausgerichtet sein, dass ein Umklappen der Deckellasche und damit auch eine Plombierung nur dann möglich ist, wenn sich die Schraube in ihrer ZU-Stellung befindet. Insbesondere bei Schnellverschluss-Schrauben erfolgt eine definierte Drehung um 90 Grad, sobald die Schraube in ihre ZU-Stellung bewegt wird. Bei einer entsprechenden Ausrichtung des Kragelements des Schraubenkopfes kann sichergestellt werden, dass nicht bereits eine noch nicht verriegelte Schraube in ihrer AUF-Stellung mit einer Plombe versehen wird.

Weitere Vorteile und Merkmale der Erfindung sind den in den Ansprüchen ferner angegebenen Merkmalen sowie dem nachstehenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: eine perspektivische Darstellung einer Schraube, die mit der erfindungsgemäßen Plombierhilfe plombiert werden kann,
- Fig. 2: eine perspektivische Ansicht der erfindungsgemäßen Plombierhilfe mit Blick auf die Unterseite der Deckellasche der Plombierhilfe im Grundzustand,
- Fig. 3: eine perspektivische Ansicht der Plombierhilfe gemäß Fig. 2 mit Blick auf die Oberseite der Deckellasche,
- Fig. 4: eine perspektivische Darstellung der in einem Bauteil versenkten Schraube gemäß Fig. 1 mit daran befestigter Plombierhilfe gemäß Fig. 2 und 3 im Grundzustand der Plombierhilfe,
- Fig. 5: eine perspektivische Darstellung der Schraube mit Plombierhilfe gemäß Fig. 4, bei der die Deckellasche auf den Schraubenkopf umgeklappt wurde,
- Fig. 6: eine perspektivische Darstellung gemäß Fig. 5 mit durch die Fixierlaschen gezogenem Plombendraht und
- Fig. 7: einen Längsschnitt durch die Schraube mit Plombierhilfe gemäß Fig. 6.

### WEGE ZUM AUSFÜHREN DER ERFINDUNG

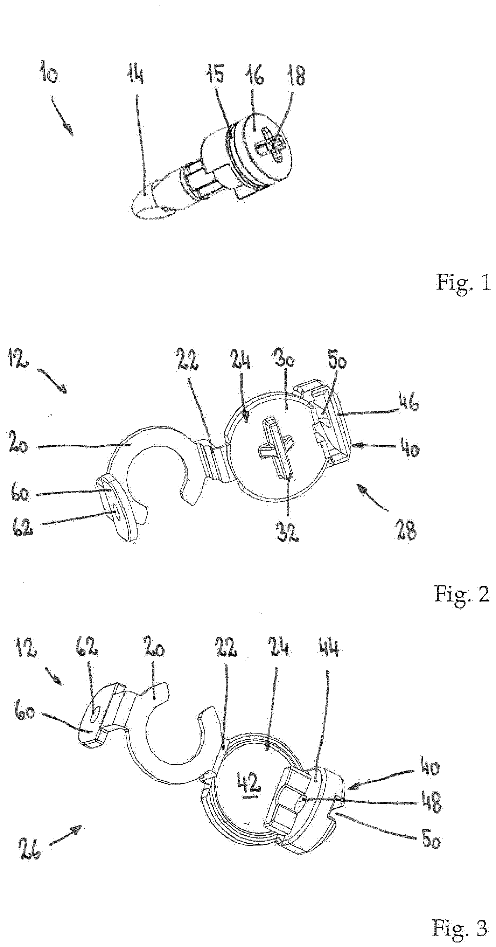

In Fig. 1 ist beispielhaft eine Schraube 10 dargestellt, die mit der erfindungsgemäßen Vorrichtung 12 plombiert werden kann. Bei der Schraube 10 handelt es sich im vorliegenden Beispielsfall um eine Verschluss-Schraube, wie sie beispielsweise in der Elektrotechnik verwendet wird. Grundsätzlich können jedoch beliebige Schrauben 10 mit der erfindungsgemäßen Vorrichtung 12 plombiert werden.

Die Schraube 10 besitzt einen Schraubenschaft 14 sowie einen Schraubenkopf 16. Abhängig von der Art der Schraube 10 kann der Schraubenschaft 14 als Gewinde oder als Bolzen mit einem Teilgewinde ausgebildet sein. Der Schraubenschaft 14 kann bei spezielleren Schrauben 10 auch eine individuelle Form aufweisen, wie es in der hier dargestellten Ausführungsform der Fall ist. In dem Schraubenkopf 16 befindet sich eine Einkerbung 18, die im vorliegenden Fall kreuzförmig ausgebildet ist. Mittels der Einkerbung 18 kann die Schraube 10 durch ein passendes Betätigungswerkzeug, beispielsweise einen Schraubendreher, gedreht werden. Die Einkerbung 18 kann grundsätzlich verschiedene Konturen aufweisen, wie sie aus dem Stand der Technik bereits bekannt sind.

Die erfindungsgemäße Vorrichtung 12 (siehe Fig. 2 und 3) besitzt ein Ösenelement 20, das im vorliegenden Beispielsfall C-förmig ausgebildet ist. Das Ösenelement 20 kann im vorliegenden Beispielsfall in eine Nut 15 unmittelbar unterhalb des Schraubenkopfes 16 geklipst werden. Dabei liegt das Ösenelement 20 unmittelbar an der Unterseite des Schraubenkopfes 16 an und verläuft um den Schraubenschaft 14 herum. An dem Ösenelement 20 ist eine Lasche 22 einteilig angeformt, die etwa senkrecht zur Ebene des Ösenelements 20 ausgerichtet ist. An der Lasche 22 ist eine Deckellasche 24 einteilig angeformt. Die Deckellasche 24 ist etwa senkrecht zur Ebene der Lasche 22 und damit etwa parallel zur Ebene des Ösenelements 20 ausgerichtet. In dem in Fig. 2 und 3 dargestellten Grundzustand 26 der Plombierhilfe 12 ist die Deckellasche 24 neben dem Ösenelement 20 angeordnet.

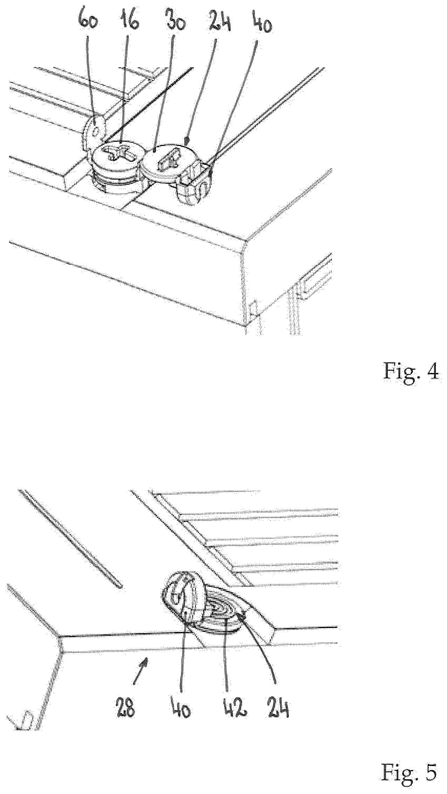

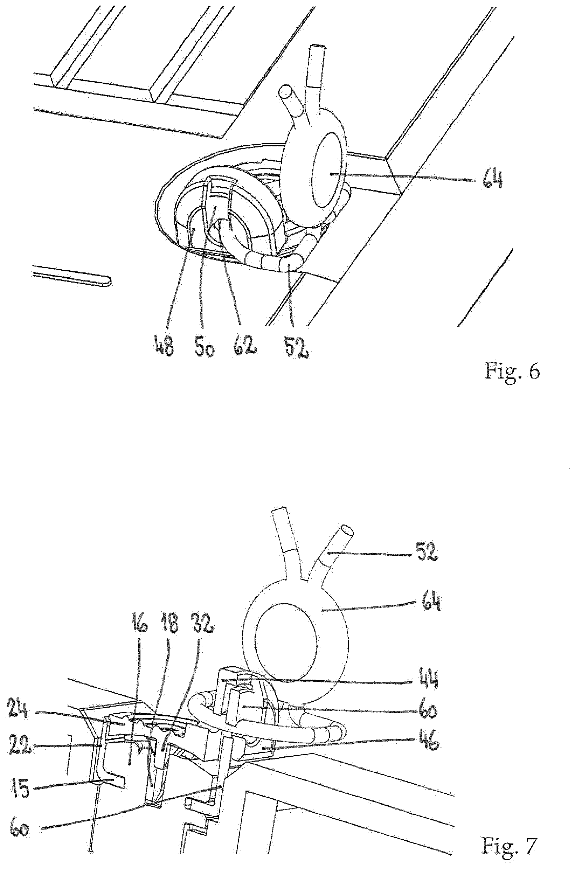

Die Deckellasche 24 kann umgeklappt werden, so dass diese oberhalb des Schraubenkopfes 16 zu Liegen kommt (siehe Fig. 5 und 6). Die Deckellasche 24 blockiert in diesem umgeklappten Zustand 28 die Einkerbung 18 des Schraubenkopfes 16, so dass die Schraube 10 nicht länger betätigt werden kann. Durch die als Abstandshalter dienende Lasche 22 kann die Deckellasche 24 im umgeklappten Zustand 28 etwa parallel zum Ösenelement 20 ausgerichtet sein, so dass der Schraubenkopf 16 optimal abgedeckt wird.

An der in Fig. 2 sichtbaren Unterseite 30 der Deckellasche 24 ist im vorliegenden Beispielsfall ein kreuzförmiges Kragelement 32 vorhanden. Dieses Kragelement 32 ist mit seiner Außenkontur an die Einkerbung 18 des Schraubenkopfes 16 angepasst, so dass das Kragelement 32 in die Einkerbung 18 des Schraubenkopfes 16 eintaucht, sobald die Deckellasche 24 auf den Schraubenkopf 16 umgeklappt wird.

An der Deckellasche 24 ist darüber hinaus eine erste Fixierlasche 40 einteilig angeformt. Die erste Fixierlasche 40 befindet sich etwa gegenüber der Lasche 22 und ist ebenfalls etwa senkrecht zur Ebene der Deckellasche 24 ausgerichtet. Die erste Fixierlasche 40 ragt dabei von der Oberseite 42 der Deckellasche 24 aus nach oben weg. Die erste Fixierlasche 40 ist taschenförmig ausgebildet und besitzt eine erste Laschenwand 44 und eine zweite Laschenwand 46. In den beiden Laschenwänden 44, 46 ist jeweils ein Durchbruch 48, 50 vorhanden. Die beiden Durchbrüche 48, 50 fluchten miteinander, so dass ein Plombendraht 52 (siehe Fig. 6) durch die Durchbrüche 48, 50 gefädelt werden kann. Im vorliegenden Beispielsfall ist der Durchbruch 50 in der zweiten Laschenwand 48 als Schlitz ausgebildet. Dies hat konstruktionstechnische Vorteile.

An dem Ösenelement 20 ist eine zweite Fixierlasche 60 einteilig angeformt. Die zweite Fixierlasche 60 befindet sich etwa gegenüber der Lasche 22 und ist ebenfalls etwa senkrecht zur Ebene des Ösenelements 20 ausgebildet. Im Grundzustand 26 der Plombierhilfe 12 ragt die zweite Fixierhilfe 60 dabei in die entgegengesetzte Richtung der ersten Fixierhilfe 40. Die zweite Fixierlasche 60 ist einwandig ausgebildet und besitzt ebenfalls einen Durchbruch 62 für einen Plombendraht 52.

Um die Schraube 10 zu plombieren, wird zunächst das Ösenelement 20 unmittelbar unter dem Schraubenkopf 16 an dem Schraubenschaft 14 befestigt (siehe Fig. 4). Anschließend kann die Schraube 10 mit der Plombierhilfe 12 an der gewünschten Stelle an einem Bauteil befestigt werden. Alternativ dazu kann auch zunächst die Schraube 10 an dem Bauteil befestigt werden. Erst nach der korrekten Positionierung der Schraube kann dann die Befestigung der Plombierhilfe 12 an der Schraube 10 erfolgen. Dies kann insbesondere bei Schnellverschluss-Schrauben 10 der Fall sein, wie sie in Fig. 1 dargestellt sind. Durch die unter dem Schraubenkopf 16 vorhandene Nut 15 kann das Ösenelement 20 auch nach dem Positionieren der Schraube 10 in dem Bauteil noch an der Schraube 10 befestigt werden.

Die Deckellasche 24 ragt in diesem Grundzustand 26 der Plombierhilfe 12 seitlich weg, so dass der Schraubenkopf 16 frei zugänglich ist. Ist die Schraube 10 ausreichend angezogen und sollen keine weiteren Manipulationen an der Schraube 10 mehr vorgenommen werden, kann die Deckellasche 24 auf den Schraubenkopf 16 umgeklappt werden (siehe Fig. 5 und 6). In diesem umgeklappten Zustand 28 der Deckellasche 24 taucht die taschenförmige erste Fixierlasche 40 in die einwandige Fixierlasche 60 ein, so dass die zweite Fixierlasche 60 zwischen den beiden Laschenwänden 44, 46 der ersten Fixierlasche 40 angeordnet ist. Die Durchbrüche 48, 50 der ersten Fixierlasche 40 fluchten in diesem Zustand 28 mit dem Durchbruch 62 der zweiten Fixierlasche 60. Durch die drei Durchbrüche 48, 50, 62 kann anschließend ein Plombendraht 52 gefädelt werden, der dann mittels einer Plombe 64 gesichert wird (siehe Fig. 6 und 7). Dadurch kann die Deckellasche 24 nicht mehr unbemerkt von dem Schraubenkopf 16 entfernt werden, so dass die Schraube 10 auch nicht mehr unbemerkt betätigt werden kann.

Im Gegensatz zu der hier dargestellten Ausführungsform wäre es auch möglich, die erste Fixierlasche 40 einwandig und die zweite Fixierlasche 60 doppelwandig und damit taschenförmig auszubilden.

## Patentansprüche

1. Vorrichtung (12) zum Plombieren von Schrauben (10)
- mit einem Ösenelement (20), das so an der Schraube (10) befestigbar ist, dass das Ösenelement (20) unterhalb des Schraubenkopfes (16) angeordnet ist,
- mit einer Deckellasche (24), die an dem Ösenelement (20) befestigt ist, wobei die Deckellasche (24) so umklappbar ist, dass die Deckellasche (24) im umgeklappten Zustand (28) oberhalb des Schraubenkopfes (16) angeordnet ist,
- mit einer ersten Fixierlasche (40), die einen Durchbruch (48, 50) für einen Plombendraht (52) aufweist und an der Deckellasche (24) angeordnet ist
- mit einer zweiten Fixierlasche (60), die einen Durchbruch (62) für einen Plombendraht (52) aufweist und an dem Ösenelement (20) angeordnet ist, wobei die erste Fixierlasche (60) und die zweite Fixierlasche (40) im umgeklappten Zustand (28) der Deckellasche (24) parallel zueinander angeordnet sind, wobei dass
- die erste Fixierlasche (40) eine erste Laschenwand (44) und eine zweite Laschenwand (46) aufweist, die mit einem gewissen gegenseitigen Abstand zueinander angeordnet sind,
- in der ersten Laschenwand (44) und in der zweiten Laschenwand (46) jeweils ein Durchbruch (48, 50) für einen Plombendraht (52) vorhanden ist, wobei die Durchbrüche (48, 50) der ersten Laschenwand (44) und der zweiten Laschenwand (46) miteinander fluchten,
- die zweite Fixierlasche (60) im umgeklappten Zustand (28) der Deckellasche (24) zwischen der ersten Laschenwand (44) und der zweiten Laschenwand (46) angeordnet ist,
- die erste Fixierlasche (40) etwa senkrecht zur Ebene der Deckellasche (24) ausgerichtet ist und von der Oberseite (42) der Deckellasche (24) aus nach oben ragt

2. Vorrichtung nach Anspruch 1,
- **dadurch gekennzeichnet, dass**
- die erste Fixierlasche (40) oder die zweite Fixierlasche (60) taschenförmig ausgebildet ist,
- die andere Fixierlasche (60) im umgeklappten Zustand (28) der Deckellasche (24) in die erste Fixierlasche (40) einsteckbar ist.

3. Vorrichtung nach Anspruch 1 oder 2,
- **dadurch gekennzeichnet, dass**
- der Abstand zwischen der ersten Laschenwand (44) und der zweiten Laschenwand (46) etwa der Breite der einwandigen Fixierlasche (60) entspricht.

4. Vorrichtung nach einem der vorstehenden Ansprüche,
- **dadurch gekennzeichnet, dass**
- das Ösenelement (20) C-förmig ausgebildet ist.

5. Vorrichtung nach einem der vorstehenden Ansprüche,
- **dadurch gekennzeichnet, dass**
- der Durchbruch (48) in der ersten Laschenwand (44) oder der Durchbruch (50) in der zweiten Laschenwand (46) als Schlitz ausgebildet ist.

6. Vorrichtung nach einem der vorstehenden Ansprüche,
- **dadurch gekennzeichnet, dass**
- die Deckellasche (24) über einen Abstandshalter (22) mit dem Ösenelement (20) verbunden ist.

7. Vorrichtung nach einem der vorstehenden Ansprüche,
- **dadurch gekennzeichnet, dass**
- an der Deckellasche (24) zumindest ein Kragelement (32) vorhanden ist,
- das zumindest eine Kragelement (32) im umgeklappten Zustand (28) der Deckellasche (24) in eine Einkerbung (18) des Schraubenkopfes (16) eintauchbar ist.

8. Vorrichtung nach Anspruch 7,
- **dadurch gekennzeichnet, dass**
- das die Außenkontur des Kragelements (32) der Innenkontur der Einkerbung (18) des Schraubenkopfes (16) entspricht.

## Claims

1. Device (12) for sealing screws (10)
- having an eyelet element (20) which is fastenable to the screw (10) in such a way that the eyelet element (20) is arranged below the screw head (16),
- having a cover tab (24) which is fastened to the eyelet element (20), wherein the cover tab (24) is able to be folded over in such a way that, in the folded-over state (28), the cover tab (24) is arranged above the screw head (16),
- having a first fixing tab (40) which has an aperture (48, 50) for a sealing wire (52) and is arranged on the cover tab (24),
- having a second fixing tab (60) which has an aperture (62) for a sealing wire (52) and is arranged on the eyelet element (20), wherein, in the folded-over state (28) of the cover tab (24), the first fixing tab (60) and the second fixing tab (40) are arranged parallel to one another, wherein
- the first fixing tab (40) has a first tab wall (44) and a second tab wall (46) which are arranged at a certain mutual distance from one another,
- a respective aperture (48, 50) for a sealing wire (52) is present in the first tab wall (44) and in the second tab wall (46), wherein the apertures (48, 50) of the first tab wall (44) and the second tab wall (46) are aligned with one another,
- the second fixing tab (60) is arranged between the first tab wall (44) and the second tab wall (46) in the folded-over state (28) of the cover tab (24),
- the first fixing tab (40) is oriented so as to be approximately perpendicular to the plane of the cover tab (24) and projects upwards from the top side (42) of the cover tab (24).

2. Device according to Claim 1,
- **characterized in that**
- the first fixing tab (40) or the second fixing tab (60) is of pocket-shaped form,
- the other fixing tab (60) is pluggable into the first fixing tab (40) in the folded-over state (28) of the cover tab (24).

3. Device according to Claim 1 or 2,
- **characterized in that**
- the distance between the first tab wall (44) and the second tab wall (46) corresponds approximately to the width of the single-walled fixing tab (60).

4. Device according to one of the preceding claims,
- **characterized in that**
- the eyelet element (20) is of C-shaped form.

5. Device according to one of the preceding claims,
- **characterized in that**
- the aperture (48) in the first tab wall (44) or the aperture (50) in the second tab wall (46) is in the form of a slot.

6. Device according to one of the preceding claims,
- **characterized in that**
- the cover tab (24) is connected to the eyelet element (20) via a spacer (22).

7. Device according to one of the preceding claims,
- **characterized in that**
- at least one extension element (32) is present on the cover tab (24),
- the at least one extension element (32) is introducible into a notch (18) of the screw head (16) in the folded-over state (28) of the cover tab (24).

8. Device according to Claim 7,
- **characterized in that**
- the outer contour of the extension element (32) corresponds to the inner contour of the notch (18) of the screw head (16).

## Revendications

1. Dispositif (12) de plombage de vis (10)
- avec un élément à œillet (20) qui peut être fixé à la vis (10) de telle sorte que l'élément à œillet (20) est agencé en dessous de la tête de vis (16),
- avec une patte de recouvrement (24) qui est fixée à l'élément à œillet (20), la patte de recouvrement (24) pouvant être rabattue de telle sorte que la patte de recouvrement (24) est agencée au-dessus de la tête de vis (16) à l'état rabattu (28),
- avec une première patte de fixation (40), qui présente un passage (48, 50) pour un fil de plombage (52) et qui est agencée sur la patte de recouvrement (24)
- avec une deuxième patte de fixation (60) qui présente un passage (62) pour un fil de plombage (52) et qui est agencée sur l'élément à œillet (20), la première patte de fixation (60) et la deuxième patte de fixation (40) étant agencées parallèlement l'une à l'autre à l'état rabattu (28) de la patte de recouvrement (24),
- la première patte de fixation (40) présentant une première paroi de patte (44) et une deuxième paroi de patte (46) qui sont agencées à une certaine distance l'une de l'autre,
- un passage (48, 50) pour un fil de plombage (52) étant respectivement présent dans la première paroi de patte (44) et dans la deuxième paroi de patte (46), les passages (48, 50) de la première paroi de patte (44) et de la deuxième paroi de patte (46) étant alignés entre eux,
- la deuxième patte de fixation (60) étant agencée entre la première paroi de patte (44) et la deuxième paroi de patte (46) à l'état rabattu (28) de la patte de recouvrement (24),
- la première patte de fixation (40) étant orientée approximativement perpendiculairement au plan de la patte de recouvrement (24) et faisant saillie vers le haut à partir du côté supérieur (42) de la patte de recouvrement (24).

2. Dispositif selon la revendication 1,
- **caractérisé en ce que**
- la première patte de fixation (40) ou la deuxième patte de fixation (60) est réalisée en forme de poche,
- l'autre patte de fixation (60) peut être insérée dans la première patte de fixation (40) à l'état rabattu (28) de la patte de recouvrement (24).

3. Dispositif selon la revendication 1 ou 2,
- **caractérisé en ce que**
- la distance entre la première paroi de patte (44) et la deuxième paroi de patte (46) correspond approximativement à la largeur de la patte de fixation à simple paroi (60).

4. Dispositif selon l'une quelconque des revendications précédentes,
- **caractérisé en ce que**
- l'élément à œillet (20) est réalisé en forme de C.

5. Dispositif selon l'une quelconque des revendications précédentes,
- **caractérisé en ce que**
- le passage (48) dans la première paroi de patte (44) ou le passage (50) dans la deuxième paroi de patte (46) est réalisé sous forme de fente.

6. Dispositif selon l'une quelconque des revendications précédentes,
- **caractérisé en ce que**
- la patte de recouvrement (24) est reliée à l'élément à œillet (20) par l'intermédiaire d'une entretoise (22).

7. Dispositif selon l'une quelconque des revendications précédentes,
- **caractérisé en ce que**
- au moins un élément en porte-à-faux (32) est présent sur la patte de recouvrement (24),
- l'au moins un élément en porte-à-faux (32) peut être plongé dans une encoche (18) de la tête de vis (16) à l'état rabattu (28) de la patte de recouvrement (24).

8. Dispositif selon la revendication 7,
- **caractérisé en ce que**
- le contour extérieur de l'élément en porte-à-faux (32) correspond au contour intérieur de l'encoche (18) de la tête de vis (16).
